(19) Europäisches Patentamt

European Patent Office

Office européen des brevets

(11) **EP 1 063 807 B1**

(12) **EUROPÄISCHE PATENTSCHRIFT**

(45) Veröffentlichungstag und Bekanntmachung des Hinweises auf die Patenterteilung:
**17.03.2004 Patentblatt 2004/12**

(51) Int Cl.$^7$: **H04L 1/00**

(21) Anmeldenummer: **99440156.0**

(22) Anmeldetag: **18.06.1999**

(54) **Gemeinsame Quellen- und Kanalcodierung**

Joint source-channel coding

Codage combiné source-canal

(84) Benannte Vertragsstaaten:
**DE ES FR GB IT**

(43) Veröffentlichungstag der Anmeldung:
**27.12.2000 Patentblatt 2000/52**

(73) Patentinhaber: **ALCATEL**
**75008 Paris (FR)**

(72) Erfinder:
- **Vary, Peter, Prof.Dr.**
**52074 Aachen (DE)**
- **Heinen, Stefan**
**52349 Düren (DE)**
- **Bleck, Stefan**
**40822 Mettmann (DE)**

(74) Vertreter: **Menzietti, Domenico, Dipl.-Ing et al**
**Alcatel**
**Intellectual Property Department, Stuttgart**
**70430 Stuttgart (DE)**

(56) Entgegenhaltungen:
**EP-A- 0 529 909      EP-A- 0 643 493**
**DE-A- 19 716 147**

- **HEINEN S ; ADRATM M ; STEIL O ; VARY P ; XU W: "A 6.1 to 13.3-kb/s variable rate CELP codec (VR-CELP) for AMR speech coding" 1999 IEEE INTERNATIONAL CONFERENCE ON ACOUSTICS, SPEECH, AND SIGNAL PROCESSING. PROCEEDINGS. ICASSP99, Bd. 1, Nr. 1, 15. - 19. März 1999, Seiten 9-12, XP002121916**

**Beschreibung**

Die Erfindung bezieht sich auf ein Verfahren zum Kodieren eines Signals. Das Signal ist insbesondere ein analoges Zeitsignals für eine Sprach- und/oder Bildübertragung. Die Kodierung wird beispielsweise angewendet in Sendeeinrichtungen eines Kommunikationssystems. Das Kommunikationssystem ist beispielsweise als leitungsgebundenes oder drahtloses System oder aus Mischformen aufgebaut. Als leitungsgebundenes System ist beispielsweise ein Telefonnetz, ein Kabelfernsehnetz oder dgl. bekannt. Als drahtloses System ist beispielsweise ein Funksystem, ein Richtfunksystem, ein Mobilfunksystem, ein GSM-Netz, ein CDMA-Netz, ein UMTS-Netz, ein DECT-Netz oder ein satellitengestütztes Netz, wie beispielsweise Iridium bekannt.

In heute gebräuchlichen digitalen Kommunikationssystemen wird das von der Datenquelle gelieferte analoge Signal, z.B. Sprache=Ton, Audio oder Bild=Video, senderseitig zunächst einer Datenkompression unterworfen, um die im Signal enthaltene Redundanz zu reduzieren und damit die zur Übertragung benötigte Bandbreite klein zu halten. Diese Art der Signalverarbeitung wird als Quellenkodierung bezeichnet.

Bei einer Quellenkodierung für Sprache wird allgemein eine Modellierung für den menschlichen Sprachtrakt zugrunde gelegt, und es werden nur die aktuellen Parameter des Modells, die die momentane Sprache beschreiben zum Empfangsort übertragen. Dort wird die Sprache mit Hilfe der Parameter neu synthetisiert.
Ähnlich signalverarbeitende Methoden werden bei einer Bildübertragung eingesetzt, wobei eine Menge Bildpunkte einer Transformationsvorschrift unterworfen und die dabei gewonnenen Koeffizienten und sogenannte Bewegungsvektoren und Steuersignale als Parameter übertragen werden.

Bei der Datenkompression werden in der Regel zunächst parametrische Größen (Signalwerte, Filterkoeffizienten, Verstärkungsfaktoren, etc.) ermittelt, die dann quantisiert und binär mit Bitfolgen kodiert werden. Die Anzahl der darstellbaren Quantisierungsstufen der einzelnen Parameter ist dabei häufig eine Zweierpotenz.

Bei der Übertragung der quantisierten Parameter über reale Übertragungskanäle treten vielfach Störungen auf. Eine Störung bestimmter, sog. sensitiver Bits der Folge führt im allgemeinen zur stärkeren Beeinträchtigung der empfangsseitigen Signalqualität als eine Störung weniger sensitiver Bits. Deshalb werden die Bits des Quellenkoders z.B. in Sensitivitätsklassen eingeteilt, die für die Übertragung über den gestörten Kanal jeweils mit unterschiedlich starkem Fehlerschutz in Form von fehlerkorrigierenden Kodes versehen werden. Dieses Verfahren wird allgemein als Kanalkodierung mit ungleichmäßigem Fehlerschutz (Unequal Error Protection, UEP) bezeichnet.

Durch die Verfahren einer Quellenkodierung werden die zu übertragenden parametrischen Größen in der Regel so quantisiert, daß das sendeseitige Signal- zu Rauschleistungsverhältnis (SNR) für die verfügbare Bitrate maximiert wird. Die Anzahl der möglichen Quantisierungsstufen ist dabei häufig eine Zweierpotenz $2^M$, um die zur Quellenkodierung verwendeten M Bits vollständig ausnutzen zu können.

Des weiteren werden Quellenkodierung und Kanalkodierung weitestgehend getrennt voneinander optimiert.

DE 197 16 147 A offenbart einen Empfänger mit Fehlerverdeckung und einen Quantisierer mit mindestens $2^M$ Quantisierungsstufen zur Parameterschätzung. Auf der Empfangsseite dient ein Prädiktor zur Berechnung einer Wahrscheinlichkeitsverteilung. Der Empfänger dient dazu, Übertragungsfehler empfangsseitig zu verdecken. Dazu wird ein linearer, gleichmäßiger Quantisierer mit mindestens $2^M$ Quantisierungsniveaus verwendet. Es ist vorgesehen, dass ein Verteilungsfunktion um den Ausgangssignalwert des Prädiktors verschoben und abschnittweise zu einer neuen Verteilungsfunktion aufintegriert wird.

Heinen, Adtram, Steil, Vary, Xu, "A 6.1 to 13.3-kb/s variable rate CELP codec (VR-CELP) for AMR speech coding" 1999 IEEE International Conference on Acoustics, Speech, and Signal Processing, Proceedings (ICASSP99, Bd. 1, Nr. 1, 15.-19. März 1999, Seiten 9-12, XP00212916) offenbart einen speziellen VR-CELP Kodierer, VR-CELP=variable rate code-excited linear prediction. Der Kodierer dient der adaptiven Multi-Rate (AMR) Übertragung und verwendet Schätzung zur Fehlerverdeckung.

EP-A-0 643 493 offenbart zur Verdeckung von Übertragungsfehlern eine Kodierung mittels eines speziellen nichtlinearen Blockkodes unter Verwendung eines Mix aus rate ½ Nordstrom Robinson code, punctured version of the Nordstrom Robinson code und unprotected class 3.

EP-A-0 529 909 offenbart zur Fehlerkorrektur Redundanz, die per se und zusätzlich zur Redundanz von konventioneller Kodierung verwendet wird. Auf der Empfangsseite wird metric calculation und viterbi decoding eingesetzt.

Aufgabe der Erfindung ist es, ein neues Verfahren zur Kodierung eines Signals bereitzustellen, das Quellen- und/oder Kanalkodierung umfaßt.

Gelöst wird diese Aufgabe durch ein Verfahren nach Patentanspruch 1.

Die Erfindung bezieht sich auf ein Verfahren, mit dem der nichtganzzahlige überschüssige Anteil von M - Id (Q) Bit bei der (Quellen-)Kodierung eines quantisierten Parameters systematisch zur Erhöhung der Fehlerrobustheit genutzt werden kann. D.h., bei Quantisierung eines amplitudenkontinuierlichen Parameters mit einem Quantisierer, dessen Stufenzahl keine Zweierpotenz ist, soll der Verzicht auf die Verwendung einiger Binärindizes (binäre Muster) sendeseitig zu einem systematischen Fehlerschutz genutzt werden, wobei empfangsseitig vorzugsweise eine Tabellendekodierung in Verbindung mit einem Parameterschätzer eingesetzt wird. Eine z.B. algebraisch konstruierte Koderedundanz wird nicht mehr zwingend auf üblichen Wegen der Kanaldekodierung mit einer wie auch immer gearteten Hard- oder Softentscheidung dekodiert, sondern indirekt mit den Mitteln einer Parameterschätzung. Die Fehlerrobustheit kann somit durch senderseitigen Zusatz einer Koderedundanz, z.B. eines Fehler-korrigierenden Kodes noch weiter gesteigert werden. Bei der empfangsseitigen Parameterschätzung wird diese Koderedundanz bei der Dekodierung mit einbezogen.

Es zeigt sich vielfach, daß bereits eine skalare oder vektorielle Quantisierung mit $2^{M-1} < Q < 2^M$ Stufen ausreichend ist, um die geforderte Grundgüte, z.B. den SNR Abstand, des Kompressionsverfahrens zu gewährleisten. Die verbleibende rechnerische effektive Wortlänge von M - Id(Q) Bits (Id = Logarithmus dualis) pro Parameter bewirkt bei Verfahren nach dem Stand der Technik eine u.U. nicht erforderliche Erhöhung der sendeseitigen Grundqualität. Dies ist, sofern nur eine Mindestqualität gefordert wird, im Sinne der empfangsseitigen Qualität bei Übertragung über einen gestörten Kanal suboptimal, da die anteilige Datenrate entsprechend M Id(Q) Bits pro Parameter besser genutzt, z.B. zur Erhöhung der Fehlerrobustheit eingesetzt werden sollte.

Bei den Verfahren nach dem Stand der Technik, die eine redundanzerhöhende Quantisierung in der Form durchfahren, daß einige Binärindizes unbenutzt bleiben, erfolgt dies nicht in Hinblick auf eine *systematische* Erhöhung der Fehlerrobustheit.

Ebenso wird bei Verfahren nach Stand der Technik sendeseitig nicht berücksichtigt, daß empfangsseitig anstelle einer Parameter-Dekodierung eine Schätzung des Parameterwertes durchgeführt werden kann, was die Fehlerrobustheit weiter verbessert, siehe Patentanmeldung DE19716147.2.

Ebenso wird bei Verfahren nach Stand der Technik *empfangsseitig* eine aufwendige Kanaldekodierung eingesetzt, um die Redundanz eines Fehler-korrigierenden Kodes zu dekodieren.

Im folgenden werden einige Vorteile der Erfindung aufgelistet:

Die Zuordnung zwischen quantisierten Parameterwerten und zu übertragenden Bitkodes wird hinsichtlich der Parameterstatistik sowie der Kanaleigenschaften optimal im Sinne eines geeigneten Kriteriums gewählt, das die Eigenschaften des Quellensignals und seine Empfindlichkeiten berücksichtigt.

Jede beliebige Anzahl $Q < 2^M$ Quantisierungsstufen kann mit M Bits so kodiert werden, daß die Redundanz von M - Id(Q) Bit optimal im Sinne einer minimalen mittleren Störung zwischen Eingang und Ausgang des Kommunkiotionssystems fehlerschützend genutzt werden kann. Q muß insbesondere keine Zweierpotenz sein.

Durch die Variation der Quantisierungsstufenzahl läßt sich der Anteil von Nutzinformation und fehlerschützender Redundanz am Bruttobitstrom in feinen Stufen einstellen. Bei Bedarf kann noch eine zusätzliche Redundanz eines Kodes hinzugefügt werden.

Alle zur Kodierung eines Parameters verwendeten Bits können dann gegenüber Übertragungsstörungen aufgrund der signalangepaßten Kodierung (Quellen- und/oder Kanalkodierung) annähernd die gleiche niedrige Sensitivität aufweisen.

Der Fehlerschutz ist parameter- und nicht bitorientiert. Dadurch kann die nach Quellenkodierung noch vorhandene Restredundanz zusätzlich zur Erhöhung der Fehlerrobustheit genutzt und so eine höhere Übertragungsqualität erzielt werden.

Das neue Verfahren unterstützt bereits sendeseitig optimal die empfangsseitige Parameterschätzung. Dadurch sind deutliche Gewinne gegenüber einer konventionellen Dekodierung zu erzielen.

Ebenso findet bei Verfahren nach dem Stand der Technik, die eine quellenoptimierte Quantisierung durchführen, keine automatische Anpassung des empfangsseitigen Dekoders an den jeweiligen Kanalzustand statt, wie dies bei der vorliegenden Erfindung der Fall ist. Vielmehr wird zur Dekodierung eine statische Tabelle verwendet, deren Einträge durch eine off-line Optimierung auf der Grundlage einer Langzeitstatistik des Übertragungskanals bestimmt wurde.

Im folgenden wird die Erfindung anhand von fünf Ausführungsbeispielen und neun Figuren erläutert. Es zeigen:

Fig. 1     eine schematische Darstellung eines Kommunikationsnetzes zur digitalen Übertragung eines analogen Signals,

Fig. 2     eine schematische Darstellung eines weiteren Kommunikationsnetzes zur digitalen Übertragung eines analogen Signals,

Fig. 3     eine schematische Darstellung eines erfindungsgemäßen Kommunikationsnetzes zur digitalen Übertragung eines analogen Signals,

Fig. 4     ein Diagramm zur vergleichenden Darstellung der Bitfehlerrate in Kommunikationsnetzen nach Fig. 1 bis 3,

Fig. 5      eine schematische Darstellung eines weiteren erfindungsgemäßen Kommunikationsnetzes zur digitalen Übertragung eines analogen Signals,

Fig. 6      ein Diagramm zur Darstellung der Wahrscheinlichkeitsverteilungsdichte des Amplitudenfaktors,

Fig. 7      eine Tabelle zur Darstellung der Abbildung der Quantisierungsniveaus auf binäre Kodeworte,

Fig. 8      eine schematische Darstellung des senderseitigen Teils eines weiteren erfindungsgemäßen Kommunikationsnetzes zur digitalen Übertragung eines analogen Signals und

Fig. 9      eine schematische Darstellung des zugehörigen empfangsseitigen Teils des weiteren erfindungsgemäßen Kommunikationsnetzes aus Fig. 8.

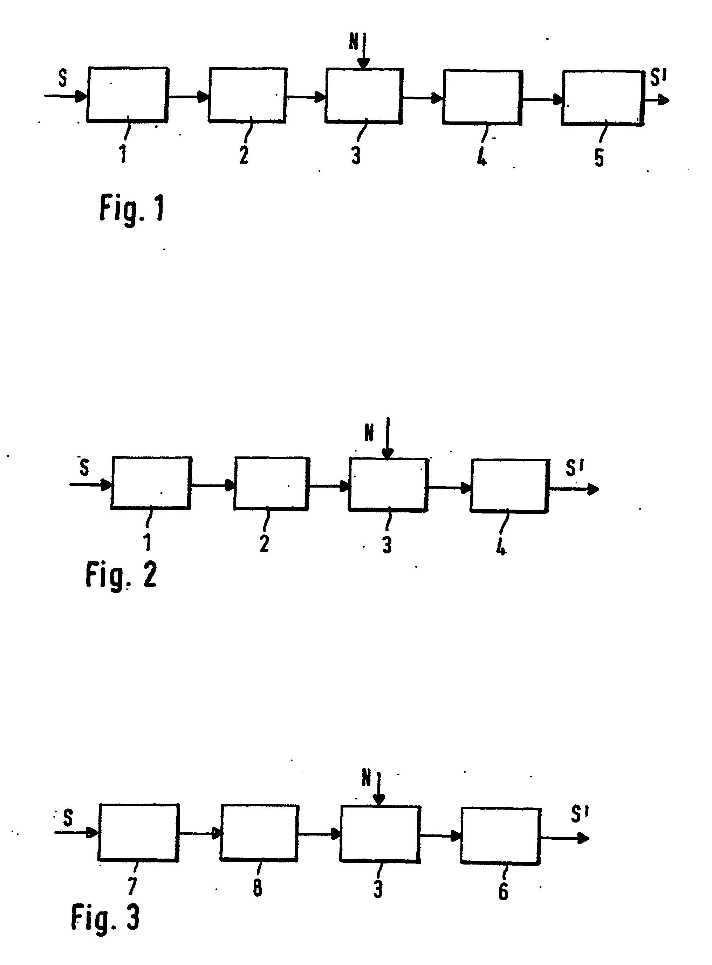

Im folgenden wird das erste Ausführungsbeispiel anhand von Fig. 1 erläutert. Fig. 1 zeigt ein ersten Kommunikationsnetz, was bereits aus dem Stand der Technik bekannt ist.

Das Kommunikationsnetz ist als eines der oben angegebenen ausgeführt. Die Sendeeinrichtung, die beispielsweise als Basisstation eines Mobilfunknetzes ausgebildet ist, beinhaltet neben einer nicht dargestellten Vielzahl von Einrichtungen, wie beispielsweise Signalaufbereitungseinrichtung, Signalverarbeitungseinrichtung, Kanalzuweisung, Multiplexer, etc. einen Kodierer 1, 2, der aus einem Quantisierer 1 und einem Abbilder 2 aufgebaut ist. Der Kodierer 1, 2 dient beispielsweise als Quellenkodierer und/oder Kanalkodierer.

Der Quantisierer 1 arbeitet beispielsweise mit 4 Bit zum Quantisieren eines analogen Signals S, z.B. eines Sprachsignals, mittels 16 Quantisierungsstufen. Das zu übertragende Signal S beinhaltet z.B. einen Modellparameter, für den angenommen wird, daß er eine mittelwertfreie Gaußverteilung mit der Varianz $\sigma = 1$ aufweist. Dieser reellwertige Parameter wird quantisiert und durch eine Abbildung ohne Redundanzerhöhung in eine Bitfolge transformiert. Die Abbildung erfolgt im Abbilder, der z.B. unter Zuhilfenahme einer Tabelle die Quantisierungstufen auf Bitfolgen abbildet. Die Bitfolgen haben im Beispiel die Länge 4 Bit, also z.B. 0110, 1000, 0010, etc.

Das so kodierte Signal wird über den Übertragungskanal 3 zu einer oder mehreren Empfangseinrichtungen 4, 5, z.B. ein sog. Handy oder Mobilfunkgerät, übertragen und bei Bedarf vor der Übertragung mit zusätzlicher Redundanz versehen, z.B. mit der Redundanz eines Fehlererkennenden oder Fehler-korrigierenden Kodes. Der Übertragungskanal ist störungsbehaftet, so daß dem Signal S während der Übertragung ein Störsignal N überlagert wird, das die Dekodierung in der Empfangeinrichtung 4, 5 erschwert.

In der Empfangseinrichtung 4, 5 wird für jedes Bit zur Dekodierung einzeln eine harte Entscheidung durchgeführt. Die Empfangseinrichtung 4, 5 beinhaltet dazu einen Entscheider 4. Dieser Entscheider 4 ist beispielsweise ein Schwellenwertdetektor, der Einsen und Nullen im empfangenen Bitstrom detektieren kann. Im Zuge der anschließenden Tabellendekodierung in einem Dekoder 5 werden diese Bits zu Tabellenindizes zusammengefaßt und es wird der entsprechende Tabelleneintrag (z.B. der Wert eines Parameters) ausgegeben. Daraufhin erfolgt die weitere Verarbeitung.

In der Regel werden für durch Quantisierung bedingte verlustbehaftete Systeme Mindestanforderungen festgelegt. So könnte für den Parameter eines Systems die Mindestanforderung lauten, daß die senderseitige Quantisierung ein bestimmtes Signal- zu Rauschleistungsverhältnis (SNR) nicht unterschreitet.

Im gezeigten System soll als Mindestforderung für das Signal- zu Rauschleistungsverhältnis 15dB gelten. Für die Übertragung des Parameterwertes stehe eine Datenrate von 4 Bit pro Parameterwert zur Verfügung.

Um die Mindestanforderung von 15dB zu erfüllen, reicht eine Quantisierung mit 3 Bit (8 Quantisierungsstufen) nicht aus. Also wird mit 4Bit (16 Stufen) quantisiert, wodurch sich sendeseitig ein SNR von 20.2dB ergibt. Die gesamte verfügbare Datenrate wird somit zur Quantisierung aufgewandt. Die Empfangseinrichtung 4, 5 führt eine harte Entscheidung und anschließend eine Tabellendekodierung durch.

Das zweite Ausführungsbeispiel wird nun unter Zuhilfenahme von Fig. 2 erläutert. Fig. 2 zeigt ein zweites Kommunikationsnetz, was bereits beispielsweise aus DE19716147.2 bekannt ist.

Das Kommunikationsnetz entspricht dem aus Fig. 1 mit dem Unterschied, daß die Dekodierung in der Empfangseinrichtung auf andere Art und Weise erfolgt. Die Dimensionierung erfolgt wie beim ersten Ausführungsbeispiel, die Dekodierung erfolgt jedoch mittels eines Parameterschätzers 6. Der Parameterschätzer 6 dient zur Fehlerverdeckung in digitalen Übertragungssystemen, bei denen empfangsseitig eine Verteilungsfunktion zur Schätzung übertragener Parameter bestimmt wird. Die Verteilungsfunktion liefert eine Wahrscheinlichkeitsverteilung zu jedem möglicherweise gesendeten Quellkode-Parameter.

Im Parameterschätzer 6 wird eine Verteilungsfunktion um den Ausgangssignalwert eines Prädiktors verschoben und abschnittsweise zu einer neuen Verteilungsfunktion aufintegriert. Diese neue Verteilungsfunktion wird mit einer die momentane Empfangsqualität berücksichtigende Verteilungsfunktion multipliziert mit dem Ergebnis einer A-posteriori-Verteilung, die in konventionellen Schätzverfahren zur letztendlichen Parameterschätzung verwendet wird.

Dieser Parameterwert muß nicht gleich einem von der Quantisierung her bekannter Wert sein; als Schätzwert kann er beliebige Zwischenwerte annehmen.

Die Empfangseinrichtung ermittelt somit aus der empfangenen Bitfolge unmittelbar einen Schätzwert für den tatsächlich gesendeten Parameterwert.

Das dritte Ausführungsbeispiel wird nun unter Zuhilfenahme von Fig. 3 erläutert. Fig. 3 zeigt ein erfindungsgemäßes Kommunikationsnetz.

Das Kommunikationsnetz entspricht dem aus Fig. 2 mit dem Unterschied, daß die Kodierung in der Sendeeinrichtung auf andere Art und Weise erfolgt.

Die Kodierung erfolgt in einem Quantisierer 7 mit nachgeschaltetem Kodierer 8.

Im Kodierer 8 erfolgt eine signalangepaßte Kodierung.

Der Quantisierer 7 wird im Gegensatz zu den ersten zwei Ausführungsbeispielen nun so dimensioniert, daß die Mindestanforderung gerade erfüllt wird. Hierzu sind 10 Quantisierungsstufen ausreichend, da der Quantisierer dann sendeseitig ein SNR von 16.2dB erreicht. Die Anzahl der Quantisierungsstufen ist dann in der Regel ungleich einer Zweierpotenz. Mittels des Quantisierers 7 wird ein wertkontinuierlicher Parameter quantisiert, z.B. ein Amplitudenfaktor, ein Anregungsvektor oder ein Filterkoeffizient. Die signalangepaßte Kodierung nutzt die rechnerisch verbleibende Bitrate von ld(16) - ld(10) = 0.68 Bit sowie die nach Quantisierung noch vorhandene Redundanz vollständig zum Fehlerschutz. Bei einer Kodierung mit M Bit kann somit die gesamte verbleibende Redundanz von M-ld(Q) Bit zum Fehlerschutz des Signals verwendet werden; Q=Quantisierungsstufen. Zusätzlich kann eine Koderedundanz angefügt werden. Die Dekodierung erfolgt in der Empfangseinrichtung wie beim zweiten Ausführungsbeispiel mittels eines Parameterschätzers 6.

Quantisierer 7 und Kodierer 8 bilden zusammen beispielsweise einen Sprach- und/oder Bildkodierer. Das Sprach und/oder Bildsignal wird durch einen Satz von Parametern repräsentiert. Bei der erfindungsgemäßen Fehlerschutztechnik wird eine optimierte Parameterquantisierung mit einer redundanten nichlinearen Blockkodierung kombiniert. Es wird ein quellenoptimierter Quantisierer 7 verwendet. Dabei wird eine nicht-ganzzahlige Quellenkodierungsbitrate verwendet, d.h. die zur Quellenkodierung verwendete Bitrate ist nicht durch eine ganze Zahl teilbar. Diese Kodierung wird als nichtlineare Kodierung bezeichnet. Ziel ist ein maximales End-to-end Parameter SNR. Es ist eine beliebige Anzahl von Q Quantisierungsstufen möglich, denen Kodewörter zugeordnet werden, mit der Maßgabe, daß $Q<2^M$ gilt. Die effektive Bitrate ld(Q), die allein zur Quellenkodierung verwendet wird ist also stets kleiner als M Bit. Die Auswahl der optimalen Anzahl der Quantisierungsstufen und der Zuordnung der Kodewörter erfolgt so, daß die End-to-end Parameter Verzerrung minimiert wird. Die Auswahl kann beispielsweise mit einem angepaßten Pseudo-Gray Kode oder einer Hadamard Transformation durchgeführt werden. Es wird beispielsweise von einer vorgegebenen oder zufällig ausgewählten Zuweisung von Kodewörtern zu Parameterwerten ausgegangen. Die Kodewörter zweier Parameterwerte werden gegeneinander vertauscht und das Resultat am Empfänger detektiert und ausgewertet. Ist das Resultat besser als das der vorherigen Konstellation wird die neue Konstellation beibehalten; ist es schlechter wird die vorherige beibehalten. Anschließend werden die Kodewörter zweier weiterer Parameterwerte vertauscht und so iterativ die Zuweisung zwischen Parameterwerten und Kodewörtern optimiert.

Es wurde nur die Übertragung z.B. von einer Basisstation zur Mobilfunkstation beschrieben. Das erfindungsgemäße Verfahren ist auch zur bidirektionalen Übertragung geeignet. Der Sprachkodierer/Dekodierer (speech codec) beinhaltet dann u.a. einen Quantisierer und einen Kodierer für die Senderichtung und mindestens einen Parameterschätzer für die Empfangsrichtung.

Das erfindungsgemäße Verfahren kann zusätzlich mit bekannten Fehlerkorrekturverfahren kombiniert werden, z.B. durch einfache Überlagerung eines Forward Error Correction Verfahrens für den Übertragungskanal.

Im Parameterschätzer 6 wird ein optimaler Schätzwert ermittelt unter Berücksichtigung der Anzahl der Quantisierungsstufen und von Kanalzustandsinformation, z.B. in Form einer als bekannt vorausgesetzten Bitfehler-Wahrscheinlichkeitsverteilung oder einer Störleistungs-Wahrscheinlichkeitsverteilung. Die Anzahl der Quantisierungsstufen wird so gewählt, daß die Qualität der geschätzten Quellensymbole empfangsseitig maximiert wird. Im Gegensatz dazu wird im Stand der Technik die Kanalkodierung so konzipiert, daß die Fehlerrate der Kanalsymbole minimiert wird.

Als geeignetes Qualitätsmaß für den Amplitudenfaktor erweist sich der negative quadratische Fehler zwischen gesendetem und geschätzten Quellensymbol oder -parameter. Als Parameterschätzer 6 wird beispielsweise ein Mean Square Schätzer verwendet.

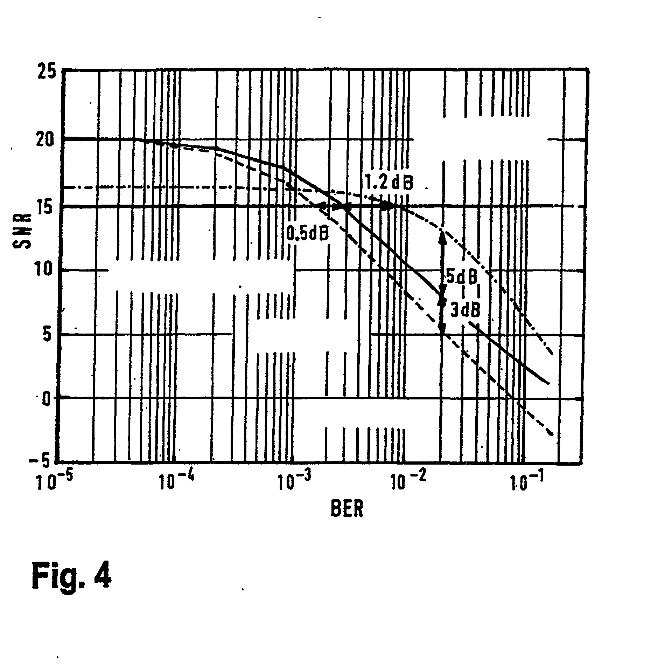

Im folgenden wird das in Fig. 4 dargestellte Diagramm beschrieben. Sämtliche zur Übertragung der Bitfolge von der Sendeeinrichtung zur Empfangseinrichtung notwendigen Funktionsblöcke werden dazu in einem äquivalenten Kanal zusammengefaßt. In der dargestellten Simulation wird die Störung auf diesem äquivalenten Kanal durch additives weißes gaußsches Rauschen angenähert.

Fig. 4 zeigt das Verhalten der drei Ausführungsbeispiele für verschiedene effektive Bitfehlerraten. Darunter ist die Bitfehlerrate zu verstehen, die sich bei BPSK-Modulation über einen Übertragungskanal nach harter Entscheidung ergibt.

Das erste Ausführungsbeispiel weist zwar für niedrige Bitfehlerraten ein hohes Parameter-SNR von ca. 20dB auf, jedoch ist dies eine unnötige Übererfüllung der festgelegten Mindestanforderung. Die Mindestanforderung kann nur bis zu einer Bitfehlerrate von ca. $1.5 \cdot 10^{-3}$ eingehalten werden.

Durch Einsatz einer empfangsseitigen Parameterschätzung, z.B. gemäß dem zweiten Ausführungsbeispiel oder gemäß einer speziell angepaßten Variante dessen verbessert sich das Parameter SNR für alle Bitfehlerraten. Bei einer Bitfehlerrate von $2 \cdot 10^{-2}$ beträgt der Gewinn ca. 3dB. Der Kanalgewinn gegenüber dem ersten Ausführungsbeispiel beträgt 0.5dB. Mit dem Kanalgewinn ist die Verringerung des SNR auf dem Kanal gemeint, die hingenommen werden kann, so daß die Mindestanforderung noch erfüllt ist.

Das dritte Ausführungsbeispiel schließlich bewirkt eine erhebliche Verbesserung der Übertragungsqualität bei mittleren und hohen Bitfehlerraten. Die Mindestanforderung kann bis zu einer Bitfehlerrate von $8 \cdot 10^{-3}$ eingehalten werden, was einem Kanalgewinn von ca. 1.7dB entspricht. Noch deutlicher wird die durch das dritte Ausführungsbeispiel erzielbare Erhöhung der Übertragungsqualität bei starken Kanalstörungen. So verbessert sich das Parameter-SNR gegenüber dem ersten Ausführungsbeispiel bei einer Bitfehlerrate von $2 \cdot 10^{-2}$ um ca. 8dB und gegenüber dem zweiten Ausführungsbeispiel um ca. 5dB.

Das dritte Ausführungsbeispiel kann auch wie folgt variiert werden: Anstelle eines Signals oder eines Parameters können auch mehrere Signale bzw. Parameter gemeinsam kodiert werden, z.B. mittels Vektorquantisierung, unter Minimierung der zu übertragenden Bitrate. Im Stand der Technik wird für jedes Signal bzw. für jeden Parameter eine 4 Bit Kodierung durchgeführt, so daß für drei Signale bzw. drei Parameter insgesamt 12 Bit benötigt werden; wobei für jede Kodierung 16 Quantisierungsstufen verwendet werden. Werden nun anstelle von 16 nur 10 Quantisierungsstufen pro Signal bzw. pro Parameter verwendet, so werden insgesamt nur 30 Quantisierungsstufen für drei Signale bzw. Parameter benötigt. Diese können mit 5 Bit kodiert werden. Daraus folgt, daß drei Signale bzw. Parameter mit nur 5 Bit übertragen werden können. Dies entspricht einer Reduktion um 7 Bit gegenüber dem Stand der Technik. Die verbleibende für die Kodierung ungenutzte Bitrate von M-3xld(Q), mit M=5 und Q=10, kann dann zum Fehlerschutz verwendet werden, z.B. für alle Signale bzw. Parameter gemeinsam oder für jedes Signal bzw. Parameter getrennt. Sollte die ungenutzte Bitrate allein nicht zum Fehlerschutz ausreichen, so können ein oder weitere Bits eines redundanten Kodes (z.B. Parity) für den Fehlerschutz zugefügt werden. Dann würden drei Signale bzw. drei Parameter mit 6 Bit übertragen, was immer noch einer Einsparung von 6 Bit entsprechen würde. Die Anzahl der zu übertragenden Signale bzw. Parameter kann somit an die verfügbare Bitrate optimal angepaßt werden. Anstelle eines Fehlerschutzes können unabhängig von der Anzahl der Signale bzw. Parameter auch Steuersignale in der ungenutzten Bitrate übertragen werden. Die Steuersignale dienen beispielsweise dem Maintenance, d.h. der Überwachung. Durch die senderseitig optimierte Quantisierung wird also eine Übertragungskapazität frei, die in der Regel eine Rate kleiner 1 Bit hat und für zahlreiche andere Übertragungen verwendet werden kann, auch für solche Nachrichten, Informationen oder Signalisierungssignale, die unabhängig von dem zu übertragenden Signal sind.

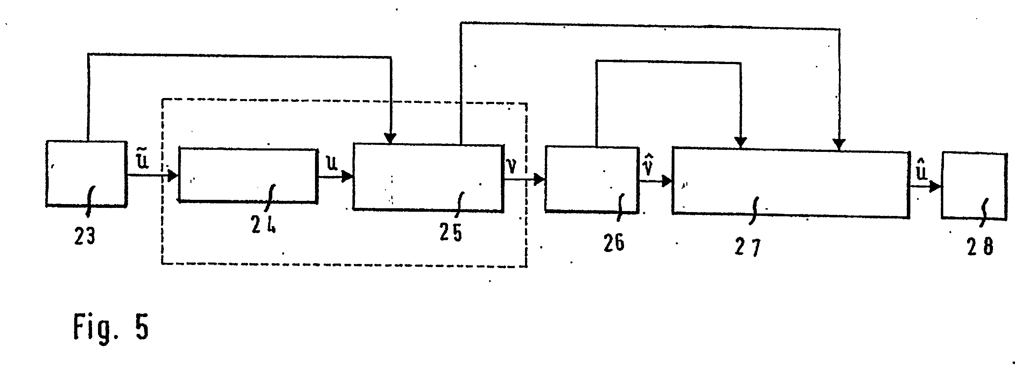

Das vierte Ausführungsbeispiel wird im folgenden unter Zuhilfenahme der Figuren 5 bis 7 erläutert.

Bei Sprachkodierverfahren, die auf dem Prinzip der "Code Excited Linear Prediction" (CELP) basieren, wird das Quellensignal im wesentlichen durch drei Parametertypen beschrieben: Filterkoeffizienten, Anregungsvektoren und Amplitudenfaktoren.

Die kombinierte Quellen- und Kanalkodierung kann vorteilhaft angewendet werden, um beispielsweise die Amplitudenfaktoren gegen Übertragungsfehler zu schützen.

In heute üblichen CELP-Kodierern werden die Amplitudenfaktoren z.B. mit 8 oder 16 Stufen quantisiert. Häufig ist eine Quantisierung mit 8 Stufen (3 Bit) nicht ausreichend, so daß mit 16 Stufen (4 Bit) quantisiert werden muß, um eine geforderte Grundqualität zu erreichen.

Durch das Verfahren entsprechend der beschriebenen Erfindung ist es nun möglich, im Gegensatz zu Systemen nach dem Stand der Technik, bei denen die Quantisierungsstufenzahl als Zweierpotenz gewählt wird, mit genau der Quantisierungsstufen-Anzahl zu quantisieren, mit der die erforderliche Grundqualität erreicht wird. Ist dies beispielsweise bei 11 Quantisierungsstufen der Fall, so kann eine Quantisierung/Kodierung mit der Rate $\frac{ld(11)}{4}$ Bit pro Parameterwert durchgeführt werden.

Um bei schlechten Kanälen eine ausreichende Qualität zu gewährleisten, kann es sinnvoll sein, die Zahl der Quantisierungsstufen sogar weiter zu verringern, um mehr Redundanz für den Fehlerschutz zur Verfügung zu stellen, oder aber zusätzliche Redundanz hinzuzufügen. Im vorliegenden Beispiel soll mit $N = 11$ Stufen quantisiert werden. Für die Übertragung steht eine Datenraten von $M = 4$ Bit pro Quellensymbol zur Verfügung.

Fig. 5 zeigt die Übertragungsstrecke mit kombinierter Quellen- und Kanalkodierung für einen Amplitudenfaktor $\tilde{u}$.

Mit 24 sind ein oder mehrere Quantisierer mit oder ohne einstellbare Quantisierungsstufen bezeichnet. Mit 25 sind ein oder mehrere Kodierer zur Durchführung von ein oder mehreren Fehlerschutz-Kodierungen bezeichnet. Mit 23 ist eine Quelle, mit 28 eine Senke bezeichnet.

Der wertekontinuierliche Amplitudenfaktor $\tilde{u}$ wird durch eine Zuordnung zu $N$ möglichen Quellensymbolen $U = \{u_1,...,u_N\}$ quantisiert. Diese werden auf $N$ Kanalsymbole $V' = \{v_{t1},...,v_{tN}\}$ abgebildet. Dabei ist dem Quellsymbol $u_i$ das Kanalsymbol $v_{ti}$ zugeordnet, i = 1,...,$N$, mit folgender Abbildung:

$$T : U \rightarrow V'.$$

Da der Symbolvorrat der Kanalsymbole $V = \{v_1, ..., v_M\}$ größer ist, als die Anzahl der Quantisierungsstufen ($M > N$), handelt es sich bei $T$ um eine redundanzerhöhende Abbildung bzw. Kodierung. Bei der Kodierung kann übermitteltes und in einem Speicher abgespeichertes a priori Wissen über die Quelle 23, z.B. über die aus dem analogen Zeitsignal modellierten Parameter verwendet werden. Parameter können beispielsweise sein: Filterkoeffizienten, Verstärkungskoeffizienten, Anregungsvektoren, Parameter bezüglich der Lautstärke, der Stimmbänder, etc. Nach Übertragung der Kanalsymbole $v$ über den gestörten Kanal 26 erhält man möglicherweise gestörte Kanalsymbole $v$. Diese werden einem Symbolschätzer 27 zugeführt, der im Sinne eines Qualitätsmaßes den optimalen Schätzwert $\hat{u}_T$ unter Berücksichtigung von übermitteltem und in einem Speicher abgespeicherten a priori Wissen über die Quelle 23, Abbildung $T$ und von Kanalzustandsinformation (z.B. in Form einer bekannten Bitfehlerwahrscheinlichkeitsverteilung oder einer bekannten Störleistungs-Wahrscheinlichkeitsverteilung) ermittelt. Die zu berücksichtigenden Informationen werden beispielsweise in Form von Tabellen zur Verfügung gestellt, die z.B. bedingte Wahrscheinlichkeiten, sog. Markovketten verwenden.

Die verwendete Abbildung ist im Gegensatz zu Kanalkodierung nach dem Stand der Technik i.a. nichtlinear, da die Menge der Kanalsymbole $V'$ im Sinne der Erfindung so bestimmt wird, daß sie in der Regel keinen abgeschlossenen Untervektorraum bilden und damit die Linearitätseigenschaft nicht erfüllt ist.

Die Abbildung T wird nämlich so gewählt, daß der Erwartungswert des hinsichtlich der Quellsymbole relevanten Qualitätsmaßes C ($u, \hat{u}_T$) zwischen gesendetem Parameterwert u und geschätztem Parameterwert $\hat{u}_T$ maximal wird:

$$E_{U, \hat{U}_T} \left\{ C(u, \hat{u}_T) \right\} = \max_T$$

Durch die ermittelte Abbildung T wird den gesendete Daten somit hinsichtlich der empfangsseitigen Qualität Redundanz unmittelbar mit dem Ziel hinzugefügt, die Qualität der geschätzten Quellensyrnbole empfangsseitig zu maximieren. Im Gegensatz dazu wird bei Verfahren nach dem Stand der Technik die Kanalkodierung im wesentlichen so konzipiert, daß die Fehlerrate der Kanalsymbole minimiert wird, was in Hinsicht auf eine maximale Qualität der Quellensymbole suboptimal ist.

Als geeignetes Qualitätsmaß für den betrachteten Amplitudenfaktor erweist sich im hier beschriebenen vierten Ausführungsbeispiel der negative quadratische Fehler zwischen gesendetem und geschätztem Quellensymbol, also

$$C(u, \hat{u}_T) = -|u - \hat{u}_T|^2.$$

Zur Vereinfachung der Darstellung wird der gestörte Übertragungskanal als gedächtnisloser symmetrischer Binärkanal mit der Bitfehlerwahrscheinlichkeit $P_e$ angenommen. Die Wahrscheinlichkeit $P(k)$ für einen $k$-fachen Bitfehler innerhalb eines empfangenen Kanalsymbols bestehend aus m Bits ergibt sich hieraus zu

$$P_m(k) = P_e^k \cdot (1 - P_e)^{m-k}.$$

Aufgrund des gewählten quadratischen Qualitätsmaßes ergibt sich der Mean Square-Schätzer als das optimale empfangsseitige Schätzverfahren. Dieser Schätzer minimiert den mittleren quadratischen Fehler zwischen gesendetem und empfangenen Parameterwert für eine spezielle Abbildung: $T : U \rightarrow V$. Die Schätzvorschrift lautet für den Parameter $\hat{u}_T$ unter Vorgabe eines empfangenen Codevektors $v$

$$\hat{u}_T(\hat{v}) = \frac{\sum_{i=1}^{N} u_i \cdot P_M \left( |T(u_i) \oplus \hat{v}| \right) \cdot P_u(u_i)}{\sum_{i=1}^{N} P_M \left( |T(u_i) \oplus \hat{v}| \right) \cdot P_u(u_i)}.$$

Dabei steht $\oplus$ für die Bitweise Exklusiv-Oder Verknüpfung zweier Kanalsymbole und $|\cdot|$ für den Betrag (bzw.

das Gewicht) eines Kanalsymbols.

Die hinsichtlich der Abbildung T zu maximierende Funktion lautet damit

$$E_{U,\hat{u}_T}\left\{C(u,\hat{u}_T)\right\} = E_{U,\hat{v}}\left\{(u,\hat{u}_T(\hat{v}))\right\} = \max_{T}.$$

Der Erwartungswert kann schließlich aufgrund der statistischen Unabhängigkeit zwischen gesendetem Parameterwert und der Kanalstörung bestimmt werden durch

$$E_{U,\hat{v}}\left\{C(u,\hat{u}_T(\hat{v}))\right\} = -\sum_{i=0}^{N-1}\sum_{j=0}^{2^m-1}\left|u_i - \hat{u}_T(\hat{v}_j)\right|^2 \cdot P_u(u_i) \cdot P_m\left(\left|T(u_i) \oplus v_j\right|\right)$$

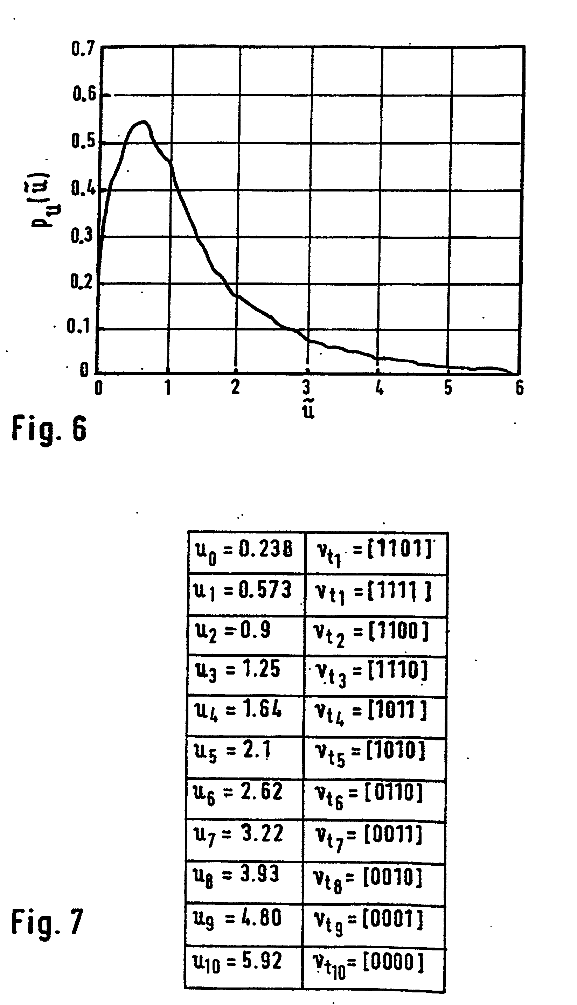

Um die verteilungsabhängige Redundanz des Parameters $\tilde{u}$ für die Kodierung nutzen zu können, ist es zunächst erforderlich, die Verteilungsdichtefunktion $p_{\tilde{u}}(\tilde{u})$ des Parameters anhand einer repräsentativen Sprachprobe zu messen. Das Ergebnis einer solchen Messung für einen wertekontinuierlichen Parameter $\tilde{u}$ zeigt Fig. 6.

Durch stückweise Integration über die Quantisierungsintervalle erhält man hieraus die Auftrittswahrscheinlichkeiten $P_u(u_i)$ der Quantisierungsniveaus $u_i$.

Die Tabelle in Fig. 7 zeigt eine für das Beispiel nach Fig. 6 geeignete Abbildung $T$ für $M$ = 16, $N$ = 11.

Die beschriebene kombinierte Quellen- und Kanalcodierung kann zur weiteren Erhöhung der Fehlerrobustheit zusätzlich mit einer konventionellen Kanalkodierung verkettet werden.

Sendeseitig erfolgt beim vierten Ausführungsbeispiel eine redundante Abbildung

$$T : U \to V'$$

von $N$ Quellensymbolen $U = \{u_1,...,u_N\}$ auf eine Teilmenge $V' = \{v_{t_1},...,v_{t_N}\}$ aller $M$ möglichen Kanalsymbole $V = \{v_1,..., v_M\}$, $M \geq N$ bzw. $V' \subseteq V$. Empfangsseitig wird vorzugsweise keine konventionelle Kanaldekodierung in Form von Fehlererkennung bzw. -korrektur, sondern eine reellwertige skalare oder vektorielle Symbol- bzw. Parameterschätzung durchgeführt, unter Berücksichtigung von a priori Wissen über die Quelle sowie über die redundante Abbildungsvorschrift T und von Qualitätsinformation über den Kanalzustand. Dabei ist dem Quellensymbol $u$ das Kanalsymbol $v_{ti}$ zugeordnet.

Alle $N < M = 2^m$ Quellsymbole werden mit Hilfe der Abbildung $T$ so auf die Kanalsymbole $\{v_{t_1},...,v_{t_N}\}$ abgebildet werden, daß der Erwartungswert

$$E_{U,\hat{u}_T}\left\{C(u,\hat{u}_T)\right\} = \min_{T}$$

auf ein auf Quellensymbole bezogenes Qualitätsmaß $C(u,\hat{u}_T)$ minimiert wird. Dabei bezeichnet $\hat{u}$ das sendeseitige Quellensymbol $\hat{u}_T$ den empfangsseitig geschätzten Wert des Quellsymbols $u$, unter Berücksichtigung der zur Kodierung verwendeten Abbildung $T$.

Bei erfindungsgemäßen Verfahren können auch zwei oder mehr Quellsymbole zusammengefaßt und gemeinsam auf ein Kanalsymbol abgebildet werden.

Die Abbildung $T$ kann auch entsprechend einem linearen Kanalcode mit $N = 2^n < M = 2^m$ ausgeführt werden.

Der sendeseitige Kodierer kann auch so ausgeführt sein, daß die Abbildung T während des Betriebs an den jeweiligen Kanalzustand angepaßt werden kann.

Senderseitig können die durch die Quantisierungsstufen Q<$2^M$ (M hochgestellt) nicht belegten binären Muster z.B. a) zur Übermittlung von Steuerinformationen oder b) einfach zur Fehlererkennung im Empfänger genutzt werden. Die Steuersignale beinhalten beispielsweise eine Kennung für die Parameter. Es kann auch ein Multiplexsignal aus einem Informationsignal und einem Synchronisationssignal oder einem anderen Signal beinhaltend begleitende Informationen mittels zwei oder mehrerer Quantisierer und ein oder mehrerer nachgeschalteter Kodierer übertragen werden.

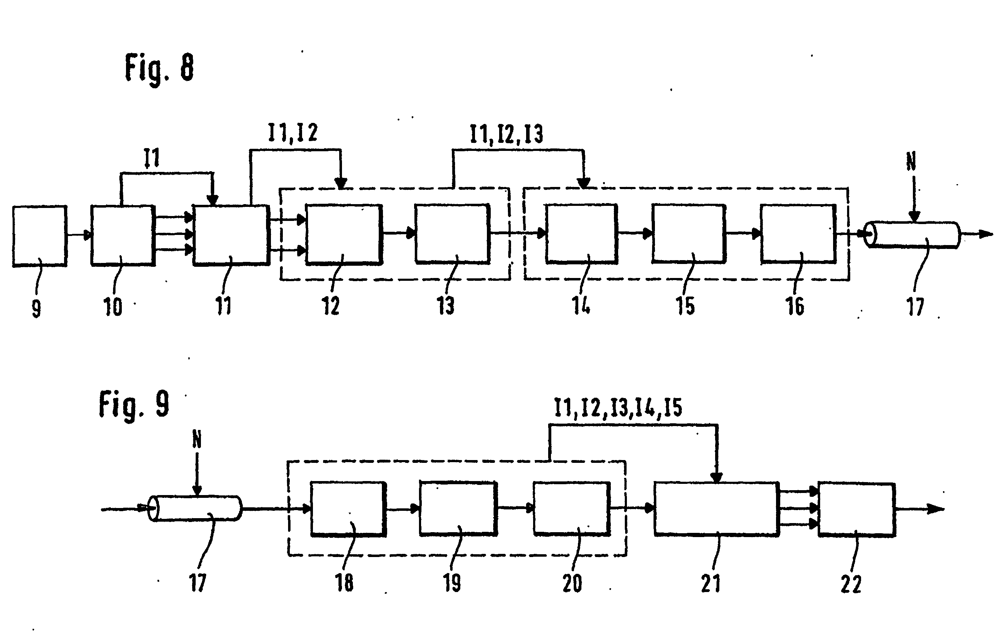

Das fünfte Ausführungsbeispiel wird nun unter Zuhilfenahme der Figuren 8 und 9 beschrieben. Fig. 8 zeigt den senderseitigen Teil des erfindungsgemäßen Kommunikationsnetzes.

Der senderseitige Teil beinhaltet acht Module 9, 10, 11, 12, 13, 14, 15, 16.

Im Modul 9 wird das zu übertragende analoge Signal erzeugt. Modul 9 ist eine Signalquelle, beispielsweise ein Mensch, ein Speicher auf dem Sprachoder Bildsignale gespeichert sind, eine Kamera, etc. Am Ausgang von Modul 9 steht ein analoges Signal zur Verfügung, z.B. ein Sprachsignal oder ein Bildsignal. Dieses Signal wird Modul 10 zugeführt.

Modul 10 ist ein Umsetzer, der aus dem analogen Sprachsignal mindestens einen Parameter generiert. Als Parameter werden beispielsweise Amplitudenfaktoren, Filterkoeffizienten, Anregungsvektoren verwendet. Am Ausgang von Modul 10 steht damit mindestens ein Parameter zu Verfügung, der Modul 11 zugeführt wird. Im Betrieb kann es notwendig sein bestimmte Parameter zu ändern, z.B. an die aktuellen Gegebenheiten des Übertragungskanals und/oder der Signalquelle anzupassen. Ene Information I1 über die Eigenschaften der Parameter, ihre vorhandene Restredundanz und/oder ihre statistischen Eigenschaften, die z.B. mittels Markov-Ketten beschrieben werden, wird abgespeichert und zu Modul 11 übertragen.

Modul 11 ist als Quantisierer ausgeführt. Im Quantisierer werden die Parameter quantisiert. Die Quantisierung erfolgt beispielsweise mit $Q=2^M$ oder $Q<2^M$ Quantisierungsstufen, wobei M die Anzahl der zur Verfügung stehenden Bits ist. Die Quantisierung wird z.B. mit einem nichtlinearen Kode oder einen linearen Kode durchgeführt. Die Parameter können einzeln oder zusammen quantisiert werden. Für den letzteren Fall wird z.B. eine Vektorquantisierung verwendet. Im Betrieb kann es notwendig sein die Methode zur Extraktion der Parameter zu ändern, z.B. an die aktuellen Gegebenheiten des Übertragungskanals und/oder der Signalquelle anzupassen. Eine Information I2 über die Auswahl der Extraktionsmethode, der Quantisierungsmethode und/oder die vorhandene Restredundanz wird z.B. in Form einer Tabelle abgespeichert und zusammen mit Information I1 zu Modul 12 und/oder Modul 13 übertragen. Die quantisierten Werte werden zu Modul 12 übertragen.

Modul 12 ist als Mapper ausgeführt. Die Funktionen der Module 12 und 13 können in geeigneten Fällen von nur einem Modul übernommen werden. Im Modul 12 werden aus den quantisierten Werten Bitmuster erzeugt, die Modul 13 zugeführt werden.

Modul 13 ist als äußerer Kanal-Kodierer ausgeführt. Hier wird den Bitmustern gezielt zusätzliche Redundanz zugeführt. Unterschiedlichen quantisierten Parameterwerten können unterschiedliche Redundanzen zugefügt werden. Eine Redundanz kann im einfachsten Fall z.B. durch ein Parity-Bit erzeugt werden und ansonsten mit Hilfe Fehler-erkennender oder Fehler-korrigierender Kodes, beispielsweise abhängig von der gewünschten Hammingdistanz. Z. B. wird für Amplitudenfaktoren eine höhere Redundanz, z.B. eine höhere Hammingdistanz gewählt als für Anregungsvektoren. Information I1 und eine Information I3 über die Kodekonstruktion liegen zunächst als a priori Information auf der Empfangsseite vor, müssen also nicht ständig übertragen werden, sondern nur bei einer Änderung der Quellenkodierung (Quantisierung) oder der Kanalkodierung. Die Information I2 wird über den Übertragungskanal, z.B. als Multiplexsignal oder eingebettet in den Datenstrom zur Empfangsseite übertragen.

Vor der Übertragung durchlaufen die Ausgangssignale des Moduls 13 sequentiell die Module 14, 15, 16. Modul 14 ist als Kanal-Kodierer ausgeführt. Hier erfolgt eine zusätzliche innere Kanalkodierung. Modul 15 ist als Interleaver ausgeführt. Hier erfolgt eine Verwürfelung. Modul 16 ist als Modulator ausgeführt. Hier erfolgt eine Modulation, z.B. mittels QAM = Quadratur Amplituden Modulation.

Der Übertragungskanal 17 ist z.B. durch Rauschen und/oder Mehrwegeempfang N gestört. Die empfangenen Signale sind daher gegenüber den ausgesandten verzerrt.

Fig. 9 zeigt den empfangsseitigen Teil des erfindungsgemäßen Kommunikationsnetzes. Der empfangsseitige Teil beinhaltet fünf Module 18, 19, 20, 21, 22.

Modul 18 ist als Demodulator und Entzerrer ausgeführt zur Demodulation der im Modul 16 modulierten Signale. Modul 19 ist als Deinterleaver ausgeführt zur Entwürfelung der im Modul 15 verwürfelten Signale. Modul 20 ist als Kanal-Dekodierer ausgeführt zur Dekodierung der im Modul 14 kanal-kodierten Signale. Am Ausgang des Moduls 20 stehen Bitmuster mit Koderedundanz und mit Zuverlässigkeitswerten (Soft Decision Werte) zur Verfügung, die Modul 21 zugeführt werden.

Modul 21 ist als Parameterschätzer ausgeführt. Der Parameterschätzer führt eine Parameterschätzung unter Berücksichtigung der o priori Informationen I1 und I3, empfangener Information I2 und weiterer Informationen I4 und I5 durch. Die Information I2 und ggf. die Informationen I1 und I3 werden vom Parameterschätzer selbst aus dem empfangenen Datenstrom ermittelt oder in einer Vorstufe, die beispielsweise einen Demultiplexer beinhaltet. Die Informationen I4 und I5 beinhalten Informationen über den Übertragungskanal. Information I4 beinhaltet beispielsweise eine typische Kanalstatistik über übliche Dämpfungen auf dem Kanal, etc. Information I4 wird z.B. bei der Erstinbetriebnahme gemessen und einmal vom Sendeort zum Empfangsort übertragen und dort gespeichert. Information I5 beinhaltet Informationen über den aktuellen Kanalzustand. Dazu sind z.B. zu zählen: die momentane Empfangsfeldstärke, die momentane Güte der Synchronisation, die momentane Güte der Filtereinstellung des Kanalentzerrers, etc. Information I5 wird z.B. in einer Vorstufe ermittelt. Informationen I4 und I5 können auch zum Sendeort übertragen werden. Quantisierung und Redundanzkodierung in den Modulen 11, 12, 13 können dann abhängig gemacht werden von den Informationen I4 und I5. In jedem Fall werden die Quantisierung und Redundanzkodierung in den Modulen 11, 12, 13 derart gewäht, daß eine Parameterschätzung in Modul 21 auf bestmögliche Weise erfolgen kann. Es wird also eine auf die Eigenschaften des Parameterschätzers optimierte Aufbereitung des zu übertragenden Signals durchgeführt unter Berücksichtigung der Kanaleigenschaften. Dazu kann eine Eichung oder Einmessung mit Testsignalen durchgeführt werden, um die Einstellungen des Parameterschätzers so adaptiv zu optimieren. Die Einstellungen werden vorteilhafterweise auch während des Betriebs ständig nachgeregelt, so daß eine optimierte Parameterschätzung durchgeführt werden kann. Am Ausgang des Parameterschätzers stehen dann die geschätzten Parameter zur Verfügung, die Modul 22 zugeführt werden.

Modul 22 ist als Umsetzer ausgeführt, der aus den geschätzten Parametern ein analoges Ausgangssignal, das geschätzte Quellensignal generiert.

Anstelle eines Signals, dem mehrere Parameter zugeordnet werden, können auch zwei oder mehr Signale aus unterschiedlichen Signalquellen, denen jeweils mindestens ein Parameter zugeordnet wird oder die direkt ohne Parametrierung quantisiert werden, mittels eines oder mehrerer Quantisierer für mindestens zwei Parameter und mittels eines oder mehrerer Kodierer aufbereitet werden. Auf der Empfangsseite wird nur ein Parameterschätzer bzw. Signalschätzer benötigt.

Es sind auch Kombinationen der Ausführungsbeispiele drei bis fünf möglich.

## Patentansprüche

1. Verfahren zum Kodieren eines Signals einer Quelle, insbesondere eines Nachrichtensignals für eine Sprach- und/ oder Bild-Übertragung,
   **dadurch gekennzeichnet,**
   **daß** eine signalangepaßte Kodierung des Signals mit M Bit derart erfolgt, daß zur Kodierung Q Quantisierungsstufen verwendet werden, wobei $Q<2^M$ gilt, und daß mindestens ein Teil der verbleibenden Redundanz zum Fehlerschutz des Signals verwendet wird.

2. Verfahren nach Anspruch 1, **dadurch gekennzeichnet, daß** die Redundanz von M-ld(Q) Bit mindestens teilweise zum Fehlerschutz des Signals verwendet wird.

3. Verfahren nach Anspruch 1, **dadurch gekennzeichnet, daß** der Fehlerschutz mittels mindestens eines nichtlinearen Kodes erzeugt wird.

4. Verfahren nach Anspruch 1, **dadurch gekennzeichnet, daß** senderseitig mindestens ein Parameter für das Quellensignal generiert und anschließend signalangepaßt kodiert wird und daß empfangsseitig zum Dekodieren eine Parameterschätzung durchgeführt wird.

5. Verfahren nach Anspruch 4, **dadurch gekennzeichnet, daß** für verschiedene Parameter verschiedene Koderredundanzen verwendet werden.

6. Verfahren nach Anspruch 4, **dadurch gekennzeichnet, daß** senderseitig mindestens bei einem Parameter zusätzlich die Redundanz eines Fehlererkennenden oder Fehler-korrigierenden Kodes zugefügt wird, und daß mindestens ein Teil dieser zusätzlichen Redundanz empfangsseitig zum Dekodieren der Quellensignale mittels Parameterschätzung mitverwendet wird.

7. Verfahren nach Anspruch 1, **dadurch gekennzeichnet, daß** senderseitig anstelle oder zusätzlich zum Fehlerschutz mindestens ein Teil der verbleibenden Redundanz zum zumindest teilweise Kodieren eines anderen Signals verwendet wird.

8. Verfahren nach Anspruch 1, **dadurch gekennzeichnet, daß** senderseitig anstelle oder zusätzlich zum Fehlerschutz mindestens ein Teil der verbleibenden Redundanz zum Übertragen eines Steuersignals verwendet wird.

9. Einrichtung zur Kodierung eines Signals nach dem Verfahren gemäß Patentanspruch 1, beinhaltend einen Quantisierer (7) mit $Q<2^M$ Quantisierungsstufen zur Durchführung einer signalangepaßten Kodierung des Signals mit M Bit, wobei zur Kodierung Q Quantisierungsstufen verwendet werden und wobei $Q<2^M$ gilt, und einen nachgeschalteten Kodierer (8) zur Durchführung einer Fehlerschutz-Kodierung, wobei mindestens ein Teil der verbleibenden Redundanz zum Fehlerschutz des Signals verwendet wird.

**10.** Einrichtung zur Kodierung eines Signals gemäß Patentanspruch 9, **dadurch gekennzeichnet, daß** mindestens zwei Quantisierer (7) oder mindestens einen Vektorquantisierer mit Q<$2^M$ einstellbaren Quantisierungsstufen und mindestens einen nachgeschalteten Kodierer (8) zur Durchführung mindestens einer zusätzlichen redundanten Fehlerschutz-Kodierung für mindestens zwei quantisierte Werte vorgesehen sind.

**Claims**

**1.** Method for coding a signal of a source, in particular a communication signal for speech and/or image transmission, **characterised in that**
signal-adapted coding of the signal with M bits is carried out in such a way that Q quantisation states are used for the coding, wherein $Q < 2^M$, and **in that** at least some of the remaining redundancy is used for error protection of the signal.

**2.** Method according to Claim 1, **characterised in that** the M - ld(Q) bit redundancy is at least partially used for error protection of the signal.

**3.** Method according to Claim 1, **characterised in that** the error protection is produced by means of at least one nonlinear code.

**4.** Method according to Claim 1, **characterised in that** at least one parameter is generated for the source signal on the transmitter side and subsequently coded in a signal-adapted way, and **in that** parameter estimation is carried out for decoding on the reception side.

**5.** Method according to Claim 4, **characterised in that** different coder redundancies are used for different parameters.

**6.** Method according to Claim 4, **characterised in that** the redundancy of an error-detecting or error-correcting code is also added in at least one parameter on the transmitter side, and **in that** at least some of this additional redundancy is concomitantly used on the reception side for decoding the source signal by means of parameter estimation.

**7.** Method according to Claim 1, **characterised in that** at least some of the remaining redundancy is used on the transmitter side for at least partially coding another signal, instead of or in addition to the error protection.

**8.** Method according to Claim 1, **characterised in that** at least some of the remaining redundancy is used on the transmitter side for transmitting a control signal, instead of or in addition to the error protection.

**9.** Device for coding a signal using the method according to Claim 1, containing a quantiser (7) with $Q < 2^M$ quantisation states for carrying out signal-adapted coding of the signal with M bits, wherein Q quantisation states are used for the coding, and wherein $Q < 2^M$, and a downstream coder (8) for carrying out error-protection coding, wherein at least some of the remaining redundancy is used for error protection of the signal.

**10.** Device for coding a signal according to Claim 9, **characterised in that** at least two quantisers (7) or at least one vector quantiser with $Q < 2^M$ adjustable quantisation states, and at least one downstream coder (8) for carrying out at least one additional redundant error-protection coding for at least two quantised values, are provided.

**Revendications**

**1.** Procédé de codage d'un signal d'une source, notamment d'un signal d'information pour une transmission de voix et/ou d'image,
**caractérisé en ce que** l'on effectue un codage adapté au signal du signal avec M bits, de façon à utiliser Q niveaux de quantifications pour le codage, avec Q<$2^M$, et **en ce qu'**au moins une partie de la redondance résiduelle est utilisée pour la protection d'erreur du signal (protection à l'encontre d'erreurs).

**2.** Procédé selon la revendication 1, **caractérisé en ce que** la redondance de M-ld(Q) bit est utilisée au moins partiellement pour la protection d'erreur du signal.

**3.** Procédé selon la revendication 1, **caractérisé en ce que** la protection d'erreur est engendrée au moyen d'au moins un code non linéaire.

4. Procédé selon la revendication 1, **caractérisé en ce que** côté émission, on génère au moins un paramètre pour le signal source, qui est alors codé de manière adapté au signal, et **en ce que** côté réception, on effectue, pour le décodage, une évaluation de paramètre.

5. Procédé selon la revendication 4, **caractérisé en ce que** pour différents paramètres on utilise des redondances de codage différentes.

6. Procédé selon la revendication 4, **caractérisé en ce que** côté émission, au moins pour un paramètre, on rajoute en supplément la redondance d'un code de reconnaissance d'erreur ou de correction d'erreur, et **en ce qu'**au moins une partie de cette redondance supplémentaire est utilisée en supplément, côté réception, pour le décodage des signaux source au moyen d'une évaluation de paramètre.

7. Procédé selon la revendication 1, **caractérisé en ce que** côté émission, à la place ou en supplément de la protection d'erreur, au moins une partie de la redondance résiduelle est utilisée pour le codage au moins partiel d'un autre signal.

8. Procédé selon la revendication 1, **caractérisé en ce que** côté émission, à la place ou en supplément de la protection d'erreur, au moins une partie de la redondance résiduelle est utilisée pour la transmission d'un signal de commande.

9. Dispositif pour le codage d'un signal d'après le procédé selon la revendication 1, comprenant un quantificateur (7) avec $Q<2^M$ niveaux de quantification pour effectuer un codage du signal adapté au signal avec M bits, Q niveaux de quantification étant utilisés pour le codage avec la relation $Q<2^M$, et comprenant également en aval, un codeur (8) pour effectuer un codage de protection d'erreur, au moins une partie de la redondance résiduelle étant utilisée pour la protection d'erreur du signal.

10. Dispositif pour le codage d'un signal selon la revendication 9, **caractérisé en ce que** sont prévus au moins deux quantificateurs (7) ou au moins un quantificateur vectoriel avec $Q<2^M$ niveaux de quantification réglables, et au moins un codeur (8) monté en aval pour effectuer au moins un codage redondant supplémentaire de protection d'erreur pour au moins deux valeurs quantifiées.

**Fig. 1**

**Fig. 2**

**Fig. 3**

## Fig. 4

Fig. 5

Fig. 6

| | |
|---|---|
| $u_0 = 0.238$ | $v_{t_1} = [1101]$ |
| $u_1 = 0.573$ | $v_{t_1} = [1111]$ |
| $u_2 = 0.9$ | $v_{t_2} = [1100]$ |
| $u_3 = 1.25$ | $v_{t_3} = [1110]$ |
| $u_4 = 1.64$ | $v_{t_4} = [1011]$ |
| $u_5 = 2.1$ | $v_{t_5} = [1010]$ |
| $u_6 = 2.62$ | $v_{t_6} = [0110]$ |
| $u_7 = 3.22$ | $v_{t_7} = [0011]$ |
| $u_8 = 3.93$ | $v_{t_8} = [0010]$ |
| $u_9 = 4.80$ | $v_{t_9} = [0001]$ |
| $u_{10} = 5.92$ | $v_{t_{10}} = [0000]$ |

Fig. 7

Fig. 8

Fig. 9